# EUROPEAN PATENT APPLICATION

(11) **EP 4 252 996 A1**
(43) Date of publication of application: **04.10.2023**
(21) Application number: 21915161.0
(22) Date of filing: 21.12.2021
(51) Int. Cl.: B29C 44/00, B29C 45/00, B29C 45/26, B32B 5/18, C08J 9/04

(54) **MOLDED BODY, AUTOMOBILE PART, AND METHOD FOR MANUFACTURING MOLDED BODY**

(30) Priority: 28.12.2020 JP 2020219608
(71) Applicant: Resonac Corporation, Tokyo 105-8518 (JP)
(72) Inventor: HATAYAMA, Akihiro, Tokyo 100-6606 (JP); NAKAMURA, Shigeya, Tokyo 100-6606 (JP); TOMITA, Kyoichi, Tokyo 100-6606 (JP); KAGAWA, Takuya, Tokyo 100-6606 (JP)
(74) Representative: Hoffmann Eitle
(86) International application number: PCT/JP2021/047430
(87) International publication number: WO 2022/145301

(57) **Abstract**

A molded body, comprising a foamed portion in which a skin layer A, a foamed layer and a skin layer B are disposed in this order in a thickness direction, wherein in the foamed portion, the foamed layer has a ratio of thickness, with respect to a total thickness of the skin layer A, the foamed layer and the skin layer B, of from 73% to 88%.

## Description

### [Technical Field]

The invention relates to a molded body, an automobile part, and a method for manufacturing a molded body.

### [Background Art]

The material for interior and exterior components of automobiles has been changing from metal to resin in order to meet the demand of recent days for weight reduction. In particular, a molded body including air bubbles (cells), obtained by foaming a resin, is expected, as a lightweight component, to achieve further improvements in fuel economy of automobiles.

As a foamed molded body used as an interior component or the like for automobiles, for example, a product obtained by a method described in Patent Document 1 is known. In this method, the molded body is produced by injecting melted resin into a cavity formed by a pair of molds, and allowing the resin to foam.

### [Prior Art Document]

### [Patent Document]

[Patent Document 1] Japanese Patent Application Laid-Open No. 2005-238726

### [Summary of the Invention]

### [Problem to be Solved by the Invention]

In order to pursue a goal of weight reduction of automobiles, there is demand for a molded body made of resin to reduce its weight. In other words, there is demand to reduce a mass per area of a molded body. However, reducing a mass per area of the molded body may lead to insufficient strength.

In view of the foregoing, the present disclosure aims to provide a molded body that can achieve weight reduction while maintaining sufficient strength, an automobile part including the molded body, and a method for manufacturing the molded body.

### [Means for Solving Problem]

The means for solving the problem includes the following embodiments.
<1> A molded body, comprising a foamed portion in which a skin layer A, a foamed layer and a skin layer B are disposed in this order in a thickness direction,
   wherein in the foamed portion, the foamed layer has a ratio of thickness, with respect to a total thickness of the skin layer A, the foamed layer and the skin layer B, of from 73% to 88%.
<2> The molded body according to claim 1, wherein an average diameter of cells included in the foamed layer is from 0.18 mm to 0.34 mm.
<3> The molded body according to <1> or < 2>, wherein a number per unit area of cells at a cross-section of the foamed layer is 11 cells/mm² or more.
<4> The molded body according to any one of <1> to <3>, wherein a maximum diameter of cells included in the foamed layer is 0.84 mm or less.
<5> The molded body according to any one of <1> to <4>, wherein cells included in the foamed layer are in a state of being oriented in a thickness direction of the foamed layer.
<6> The molded body according to any one of <1> to <5>, wherein a thickness of the skin layer A and a thickness of the skin layer B are from 0.26 mm to 0.36 mm, respectively.
<7> An automobile part, comprising the molded body according to any one of <1> to <6>.
<8> A method for manufacturing the molded body according to any one of <1> to <6>, the method comprising:
   supplying a composition including a resin and a foaming agent to an internal space of a molding apparatus having a movable portion; and
   increasing a volume of the internal space by moving the movable portion of the molding apparatus.

### [Effect of Invention]

According to the present disclosure, a molded body that can achieve weight reduction while maintaining sufficient strength, an automobile part including the molded body, and a method for manufacturing the molded body are provided.

### [Brief Description of Drawings]

Fig. 1 is an X-ray CT scan image of a cross-section of a molded body prepared in Example 1.
Fig. 2 is an X-ray CT scan image of a cross-section of a molded body prepared in Example 2.
Fig. 3 is an X-ray CT scan image of a cross-section of a molded body prepared in Example 3.
Fig. 4 is an X-ray CT scan image of a cross-section of a molded body prepared in Example 4.
Fig. 5 is an X-ray CT scan image of a cross-section of a molded body prepared in Example 5.
Fig. 6 is an electron micrograph of a cross-section of a molded body prepared in Comparative Example 1.
Fig. 7 is a schematic sectional view of an exemplary configuration of a molding apparatus used for the manufacture of a molded body.
Fig. 8 is a schematic sectional view of an exemplary configuration of an injection apparatus used for the manufacture of a molded body.

### [Embodiments for Implementing Invention]

Embodiments for carrying out the present invention will now be described in detail. However, the invention is in no way limited to the following embodiments.

In the following embodiments, constituent elements (including element steps and the like) of the embodiments are not essential, unless otherwise specified. Likewise, numerical values and ranges thereof are not intended to restrict the invention.

In the present disclosure, the definition of the term "step" includes not only an independent step which is distinguishable from another step, but also a step which is not clearly distinguishable from another step, as long as the purpose of the step is achieved.

In the present disclosure, any numerical range described using the expression "from * to" represents a range in which numerical values described before and after the "to" are included in the range as a minimum value and a maximum value, respectively.

In a numerical range described in stages, in the present disclosure, an upper limit value or a lower limit value described in one numerical range may be replaced with an upper limit value or a lower limit value in another numerical range described in stages. Further, in a numerical range described in the present disclosure, the upper limit value or the lower limit value in the numerical range may be replaced with a value shown in the Examples.

In the present disclosure, each component may include plural kinds of substances corresponding to the component. In a case in which plural kinds of substances corresponding to each component are present in a composition, the content ratio or content of each component refers to the total content ratio or content of the plural kinds of substances present in the composition, unless otherwise specified.

In the present disclosure, the term "layer" includes, when a region with a layer is viewed, a case in which a layer is formed at a portion of the region, in addition to a case in which a layer is formed at an entire region.

In the present disclosure, when an embodiment is explained by referring to a drawing, the embodiment is not limited to a configuration illustrated in the drawing. The relative relationship in the size of components is not limited to that conceptually illustrated in the drawing.

### <Molded body>

The molded body according to the present disclosure is a molded body, comprising a foamed portion in which a skin layer A, a foamed layer and a skin layer B are disposed in this order in a thickness direction,
wherein in the foamed portion, the foamed layer has a ratio of thickness, with respect to a total thickness of the skin layer A, the foamed layer and the skin layer B, of from 73% to 88%.

In the present disclosure, the "foamed layer" refers to a portion in which cells are included in a resin, and the "skin layer" refers to a portion in which cells are not included in a resin.

In the present disclosure, a portion in which a skin layer A, a foamed layer and a skin layer B are disposed in this order may be referred to as a "foamed portion", and a ratio of thickness of a foamed layer with respect to a total thickness of skin layer A, foamed layer and skin layer B may be referred to as a "foamed-layer ratio". The skin layer A and the skin layer B may be referred to as a "skin layer", respectively.

The molded body according to the present disclosure has a greater proportion of a formed layer in a formed portion, as compared with conventional molded bodies used as automobile parts. In other words, the molded body according to the present disclosure has a relatively greater proportion of a formed layer, which is lower in density than skin layers, as compared with conventional molded bodies used as automobile parts. Therefore, the molded body according to the present disclosure can reduce its weight by reducing a mass per unit area, while maintaining an equivalent thickness to that of conventional molded bodies. Further, the molded body according to the present disclosure sets an upper limit on a thickness of the foamed layer, such that a skin layer with a sufficient degree of thickness, which has a greater strength than a foamed layer, is disposed at each side of the foamed layer. As a result, the molded body maintains a sufficient degree of strength.

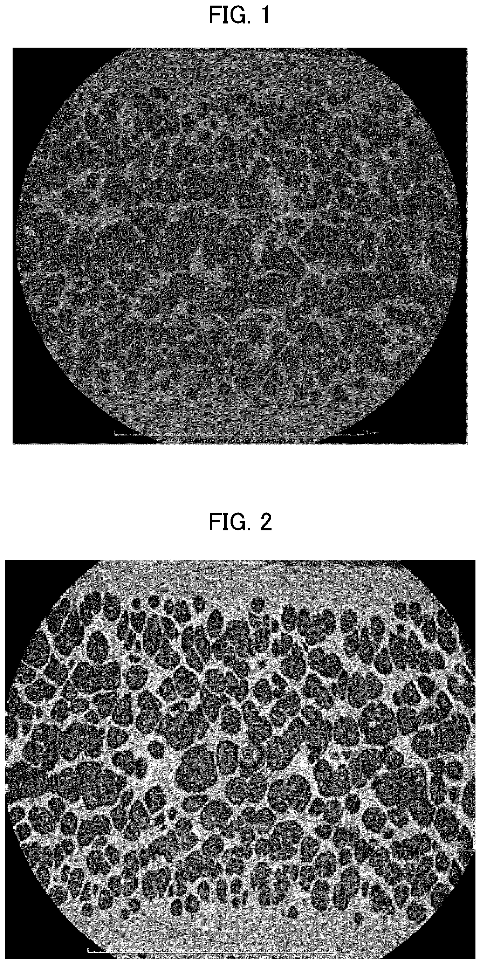

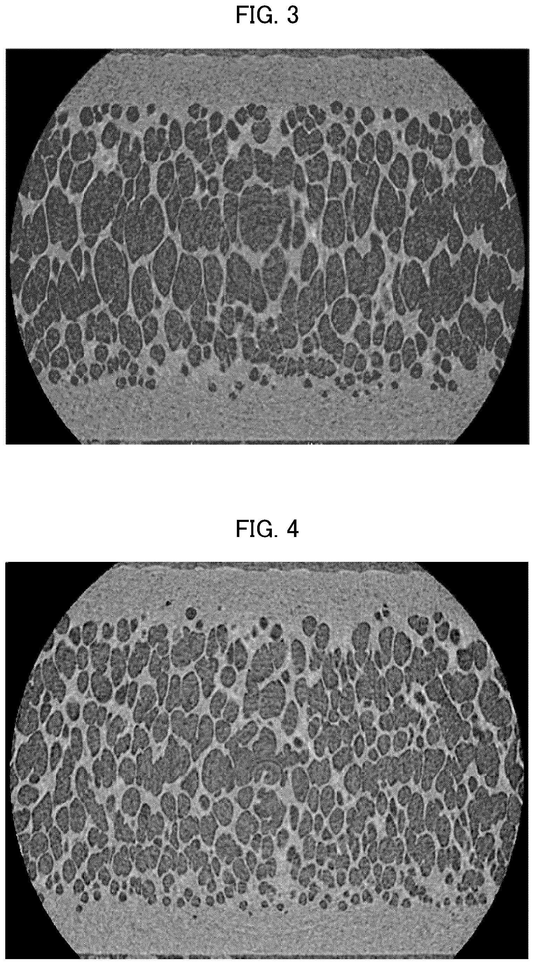

Fig. 1 to Fig. 6 are exemplary cross-sectional images of a foamed portion of the molded body. The cross-section shown in Fig. 1 to Fig. 6 is obtained by cutting a foamed portion of the molded body in a thickness direction. In Fig. 1 to Fig. 6, a region with a relatively low brightness corresponds to a cell and a region with a relatively high brightness corresponds to a resin. The region in which cells are present corresponds to a foamed layer, and the regions disposed at each side of the foamed layer, in which cells are not present, correspond to skin layers.

From the viewpoint of weight reduction, the foamed-layer ratio at a foamed portion of the molded body is preferably 75% or more, more preferably 77% or more.

From the viewpoint of maintaining sufficient strength, the foamed-layer ratio in the foamed portion of the molded body is preferably 85% or less, more preferably 83% or less.

When the molded body does not have a foamed portion with a uniform thickness, a ratio of thickness of a foamed layer with respect to a total thickness of a skin layer A, a foamed layer and a skin layer B, measured at a portion at which the foamed layer has a maximum thickness, is regarded as the foamed-layer ratio.

In the present disclosure, the thicknesses of a skin layer and a formed layer are measured by observing an image of a cross-section of a formed portion of the molded body. The type of the image is not particularly limited, and an X-ray CT scan image, an electron micrograph, or the like may be used. The size of an area for observation should be at least 1.5 mm in width.

Specifically, in an image of a cross-section of a formed portion of the molded body, a thickness of a region in which cells are not observed and a thickness of a region in which cells are observed are measured, and the measured values are regarded as a thickness of a skin layer and a thickness of foamed layer, respectively.

In the measurement, the border between a skin layer and a foamed layer is determined by the following manner.

Over an image of a cross-section of a foamed portion of the molded body, a straight line that is perpendicular to a thickness direction of the formed portion is moved from an outer periphery toward a center of the formed portion. When the straight line encounters, for the first time, a cell having at least one of lateral or longitudinal diameter of at least 0.03 mm, the straight line stops moving. The portion at which the straight line stops moving is regarded as the border between a skin layer and a foamed layer.

In the present disclosure, the lateral diameter of a cell refers to a maximum size of the cell in a direction perpendicular to a thickness direction of a formed portion, and the longitudinal diameter of a cell refers to a maximum size of the cell in a thickness direction of a formed portion.

The average diameter of cells included in a formed layer is preferably 0.12 mm or more, more preferably 0.18 mm or more. When the average diameter of cells is 0.12 mm or more, a sufficient degree of weight reduction of a molded body tends to be achieved.

The average diameter of cells included in a formed layer is preferably 0.24 mm or less, more preferably 0.21 mm or less. When the average diameter of cells is 0.24 mm or less, local deviation in the strength of a molded body tends to be suppressed.

The maximum diameter of cells included in a formed layer is preferably 0.84 mm or less, more preferably 0.70 mm or less, further preferably 0.65 mm or less. When the maximum diameter of cells is 0.84 mm or less, local deviation in the strength of a molded body tends to be suppressed.

In the present disclosure, the average diameter and the maximum diameter of cells are measured by observing an image of a cross-section of a formed portion of the molded body, similar to the measurement of the thickness of a skin layer and a formed layer.

In the measurement, a size of a cell in a lateral direction and a size of a cell in a longitudinal direction are regarded as a lateral diameter and a longitudinal diameter of the cell, respectively.

An "average diameter of cells" is obtained by dividing, by two, the sum of an arithmetic value of lateral diameters of all cells observed in an image and an arithmetic value of longitudinal diameters of all cells observed in the image.

A "maximum diameter of cells" is a maximum value of the lateral diameters and longitudinal diameters of all cells observed in the image.

In the measurement, a cell having a lateral diameter or a longitudinal diameter of less than 0.03 mm is not regarded as the cells observed in the image.

The number per unit area of cells at a cross-section of the foamed layer is preferably 30 cells/mm² or more, more preferably 40 cells/mm² or more, further preferably 45 cells/mm² or more. When the number per unit area of cells at a cross-section of the foamed layer is 30 cells/mm² or more, an effect of reducing the weight of the molded body may be sufficiently achieved.

The upper limit of the number per unit area of cells at a cross-section of the foamed layer is not particularly limited. From the viewpoint of securing the strength of the molded body, the upper limit of the number per unit area of cells at a cross-section of the foamed layer may be 100 cells/mm² or less, 80 cells/mm² or less, or 60 cells/mm² or less.

In the present disclosure, the number per unit area of cells at a cross-section of the foamed layer is measured by observing an image of a cross-section of a formed portion of the molded body, similar to the measurement of the thickness of a skin layer and a formed layer.

Specifically, the number of all cells observed in a cross-section of a foamed layer (except a cell having a lateral diameter or a longitudinal diameter of less than 0.03 mm) is divided by an area of a cross-section of a formed layer to be observed (mm²), and the result is regarded as the number per unit area of cells at a cross-section of the foamed layer.

The cells included in a formed layer may be in a state of being oriented along a thickness direction of the foamed layer.

It is thought that a state of cells being oriented along a thickness direction of the foamed layer is formed during a molding process of a molded body, in which cells formed in a resin are elongated along a direction of movement of a mold. The fact that a foamed layer includes cells that are oriented along a thickness direction of the foamed layer indicates that the foamed layer has a sufficient thickness within the limit of securing sufficient strength.

In the present disclosure, the "cells being oriented along a thickness direction of the foamed layer" refers to cells having an average aspect ratio of 1.01 or more, or an average aspect ratio of 1.10 or more. The average aspect ratio of cells refers to a ratio of the arithmetic average value of longitudinal diameter of cells to the arithmetic average value of lateral diameter of cells (arithmetic average value of longitudinal diameter / arithmetic average value of lateral diameter) obtained in the measurement as mentioned above.

From the viewpoint of securing sufficient strength of the molded body, the cells included in the foamed layer preferably has an average aspect ratio of 1.80 or less, more preferably 1.70 or less, further preferably 1.35 or less.

The thickness of a foamed layer in a foamed portion is not limited as long as the foamed layer satisfies the foamed-layer ratio as mentioned above. For example, the foamed layer may have a thickness of from 2.00 mm to 4.00 mm. If the thickness of the foamed layer is within the range, weight reduction of the molded body tends to be achieved while securing sufficient strength, when the molded body is manufactured by an ordinary foam-molding method.

When the foamed layer does not have a uniform thickness, a thickness measured at a position at which the foamed layer has a maximum thickness is regarded as the thickness of the foamed layer.

The thickness of the skin layer in the foamed portion is not particularly limited, as long as it satisfies the foamed-layer ratio as mentioned above. For example, the skin layer may have a thickness of from 0.26 mm to 0.36 mm. When the thickness of the skin layer is within the range, weight reduction of the molded body tends to be achieved while maintaining sufficient strength, when the molded body is manufactured by an ordinary foam-molding method.

The thickness of a skin layer as mentioned above refers to a thickness of each of skin layer A or skin layer B disposed at each side of a formed layer.

When the thickness of a skin layer varies by location, a value measured at a portion at which the skin layer has a maximum thickness is regarded as the thickness of a skin layer.

The thickness of a foamed portion (i.e., a total thickness of a formed layer and skin layers disposed at each side thereof) of the molded body may be determined according to the purpose of the molded body or the like.

From the viewpoint of a balance between weight reduction and securing stiffness, the thickness of a formed portion of the molded body is preferably 6 mm or less, more preferably 5 mm or less, further preferably 4 mm or less.

From the viewpoint of flow resistance of a melted resin being charged in a mold, the thickness of a formed portion of the molded body is preferably 1 mm or more, more preferably 1.5 mm or more, further preferably 2 mm or more.

When the molded body has a formed portion and a portion that is not a formed portion (for example, a bend of the molded body), the ratio of a formed portion with respect to the total molded body is not particularly limited, and may be determined depending on the purpose of the molded body or the like. For example, the ratio of a formed portion with respect to the total molded body may be from 50% to 100%, from 70% to 100%, or from 80% to 100%, based on a superficial area in planar view of the molded body.

The kind of the resin included in the molded body is not particularly limited. From the viewpoint of ease of molding, a balance between tenacity and strength, or other properties, the resin is preferably a thermoplastic resin. The molded body may include a single kind of resin or two or more kinds thereof.

Specific examples of the resin include at least one selected from the group consisting of polyethylene resin, polypropylene resin, composite polypropylene resin, polystyrene resin, polyethylene terephthalate resin, polyvinyl alcohol resin, vinyl chloride resin, ionomer resin, polyamide resin, acrylonitrile/butadiene/styrene copolymer (ABS) resin and polycarbonate resin. Among these resins, at least one selected from the group consisting of polypropylene resin, composite polypropylene resin and acrylonitrile/butadiene/styrene copolymer (ABS) resin is preferred.

The molded body may include a component other than a resin, as necessary. Examples of the component other than a resin include an additive such as carbon black and a component derived from a foaming agent as described later. When the molded body include a component other than a resin, the total content thereof with respect to the total molded body is preferably 15% by mass or less, more preferably 10% by mass or less, further preferably 5% by mass or less.

When the molded body includes a component other than a resin, the total amount of a resin in the total molded body is preferably 85% by mass or more, more preferably 90% by mass or more, further preferably 95% by mass or more.

The purpose of the molded body is not particularly limited. Since the molded body is light in weight and has excellent strength, the molded body is suitable for purposes that require lightness in weight and excellent strength, such as internal or external parts for automobiles. Specific examples of the internal or external parts for automobiles include Sacco moldings, arch moldings, side moldings, rocker moldings, bumpers and back door trims.

### <Automobile part>

The automobile part according to the present disclosure includes the molded body as mentioned above.

The type of the automobile part is not particularly limited, and may be selected from internal or external automobile parts such as Sacco moldings, arch moldings, side moldings, rocker moldings, bumpers and back door trims.

### <Method for manufacturing molded body>

The method for manufacturing a molded body according to the present disclosure is a method for manufacturing the molded body as mentioned above, the method comprising:
supplying a composition including a resin and a foaming agent to an internal space of a molding apparatus having a movable portion; and
increasing a volume of the internal space by moving the movable portion of the molding apparatus.

In the present method, the volume of an internal space of a molding apparatus, in which a composition has been supplied, is increased by moving a movable portion of the molding apparatus. In this process, cells are formed by the action of a foaming agent included in the composition. As a result, a molded body that has a formed portion, including a formed layer including cells and skin layers disposed at each side of the formed layer, is produced.

In the present method, the techniques for controlling the foamed-layer ratio or other conditions of the molded body to be within the aforementioned ranges are not particularly limited. For example, the formed-layer ratio or other conditions may be controlled by the type or the amount of the resin or the foaming agent included in the composition, or by the molding conditions such as the temperature of the composition and the molding apparatus or the time for molding.

The kind of the resin included in the composition is not particularly limited, and may be selected from the resins that may be included in the molded body as described above.

The kind of the foaming agent is not particularly limited, and may be either an organic foaming agent or an inorganic foaming agent.

Specific examples of the organic foaming agent include azodicarbonamide (ADCA), N,N-dintrosopentamethylenetetramine (DPT), 4,4-oxybis(benzenesulfonylhydrazide (OBSH) and hydroazodicarbonamide (HDCA). Specific examples of the inorganic foaming agent include sodium hydrogen carbonate.

Among the organic foaming agents, when the molded body is used as an exterior part, azodicarbonamide (ADCA) is preferred.

By using azodicarbonamide (ADCA), the molded body has an improved warm-water resistance, and occurrence of blisters in a warm-water test tends to be suppressed. The blister refers to a state in which a skin layer is raised by a gas, which is generated by reaction of water with an unreacted foaming agent remaining in a skin layer.

The decomposition temperature of the foaming agent is preferably from 50°C to 200°C, more preferably from 80°C to 200°C. The decomposition temperature of the foaming agent is may be from 130°C to 200°C.

The content of the foaming agent in the composition is preferably determined depending on the type of the foaming agent or the like.

For example, when an organic foaming agent (preferably azodicarbonamide) is used as the foaming agent, the content of the organic foaming agent in the composition is preferably from 0.05% by mass to 1.0% by mass, more preferably from 0.1% by mass to 0.5% by mass, from the viewpoint of foaming properties.

The content of the foaming agent as mentioned above is a content of the foaming agent in a composition before being supplied to a molding apparatus.

In the present method, the temperature of the composition when it is supplied to a molding apparatus is not particularly limited. When the composition includes a thermoplastic resin, the temperature of the composition is preferably equal to or higher than a softening point of the thermoplastic resin.

The molding apparatus used in the present method is not particularly limited, as long as at least a portion thereof is movable. From the viewpoint of workability, the molding apparatus is preferably a pair of molds with at least one of them being movable.

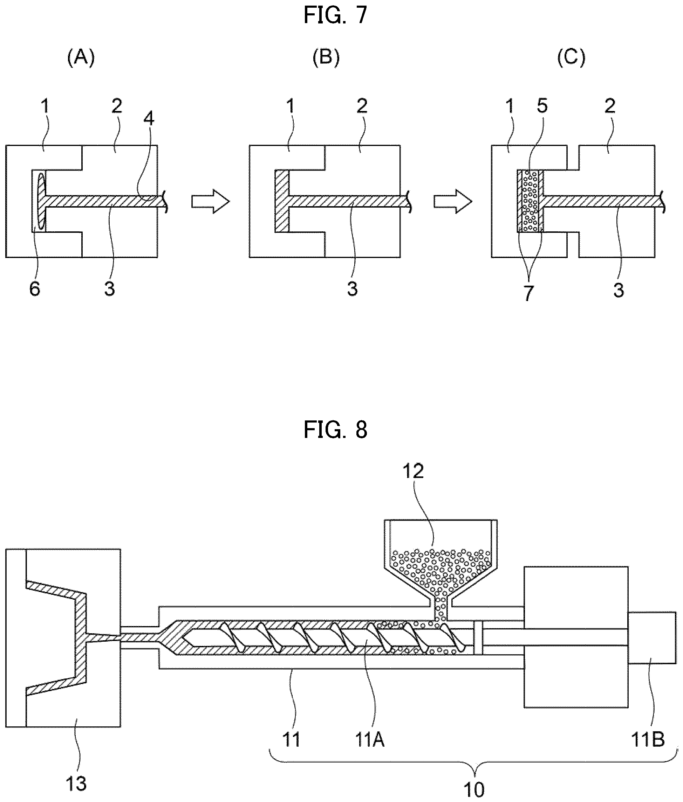

Fig. 7 shows an exemplary configuration of the molding apparatus. The molding apparatus shown in Fig. 7 has a movable mold 1; a fixed mold 2; a cavity corresponding to a space between the movable mold 1 and the fixed mold 2; and a gate 4 that penetrates the fixed mold 2 from the outside to the cavity 6. In the following, the movable mold 1 and the fixed mold 2 may be collectively referred to as a "mold".

First, as shown in (A) in Fig. 7, a composition 3 including a resin and a foaming agent is supplied to the cavity 6 from an injection apparatus (not shown) through the gate 4. When the composition 3 includes a thermoplastic resin, the composition 3 is supplied to the cavity 6 while the thermoplastic resin is melted or softened to become flowable.

The mold generally has a lower temperature than the composition 3 to be supplied to the mold. Therefore, when the composition 3 fills the cavity 6 as shown in (B) in Fig. 7, the composition 3 starts to solidify at a portion at which the composition 3 is in contact with the mold.

Subsequently, a foamed layer 5 is formed by moving the movable mold 1 by a predetermined distance (core back) to cause a portion of the composition 3, which has not been solidified, to foam. Between the foamed layer 5 and the mold, skin layers 7 are formed from the solidified composition 3.

The material for the molding apparatus is not particularly limited, and may be selected from ordinary materials. Examples of the materials include stainless steels, pre-hardened steels, alloy tool steels, high-speed tool steels and ultra-hard tool steels.

The method for supplying the composition to the molding apparatus as shown in Fig. 7 is not particularly limited. For example, the composition may be supplied to the molding apparatus by means of an injection apparatus, as shown in Fig. 8, which prepares and supplies the composition to the molding apparatus in a continuous manner.

The injection apparatus 10 as shown in Fig. 8 has a cylinder 11 and a hopper 12 that supplies a raw material of the composition to the cylinder 11. The outlet of the cylinder 11 is connected to the mold 13 of the molding apparatus.

The cylinder 11 has a screw 11A that prepares a composition by mixing the raw material and transports the composition toward the mold 13 of the molding apparatus; a motor 11B that drives the screw 11A; and a heater (not shown) that heats inside the cylinder 11. The raw material that has been supplied to the cylinder 11 is melted while moving toward the mold 13.

### [Examples]

In the following, the present invention is explained in detail by referring to the Examples. However, the present invention is not limited to the Examples.

### <Comparative Example 1>

A resin (100 parts by mass), a foaming agent (1 part by mass) and an additive (3 parts by mass) were supplied to a hopper of an injection apparatus having a configuration as shown in Fig. 8. Inside the cylinder, the materials were mixed while melting the resin to prepare a composition. The composition was supplied to a cavity formed by a pair of molds, one of which being movable. After supplying the composition to the cavity, the composition was caused to foam by moving the movable mold (core), thereby obtaining a molded body.

Details of the materials used for the preparation of the composition are as follows.
Resin: polypropylene
Foaming agent: masterbatch including azodicarbonamide (ADCA)
Additive: masterbatch including black pigment

### <Examples 1 to 5>

A molded body obtained from a composition including a resin (100 parts by mass) and a foaming agent (0.5 part by mass) prepared in the same manner by Comparative Example 1. The resin and the foaming agent are the same as the resin and the forming agent used in Comparative Example 1.

### <Observation of cross-section and measurement of mass of molded body>

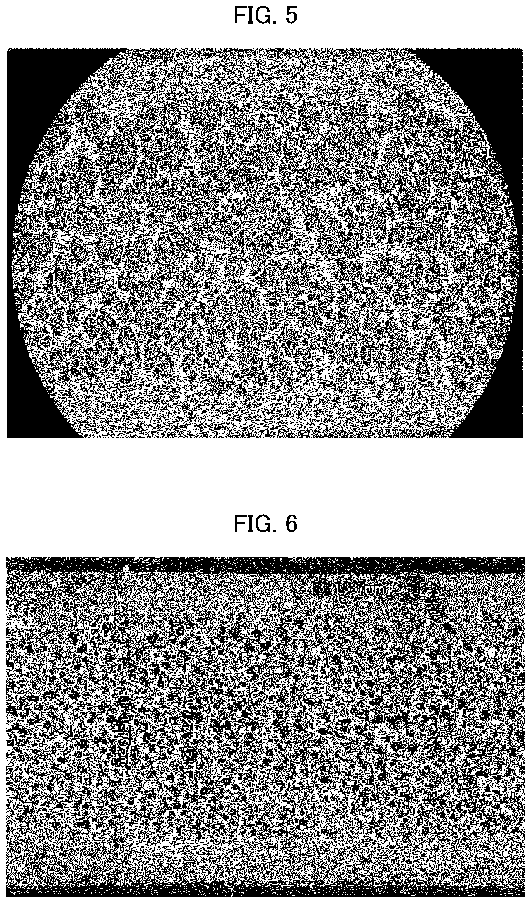

X-ray CT scan images of a cross-section of a molded body, which was obtained by cutting the molded bodies prepared in Examples 1 to 5 in a thickness direction, are shown in Figs. 1 to 5, respectively. An electron micrograph of a cross-section of a molded body, which was obtained by cutting the molded body prepared in Comparative Example 1 in a thickness direction, is shown in Fig. 6.

The molded bodies obtained in Examples 1 to 5 and Comparative Example 1 had a cross-section in which a skin layer A (a skin layer at a cavity-side), a foamed layer, and a skin layer B (a skin layer at a core-side) were disposed in this order.

A formed-layer ratio was calculated from the thicknesses of the skin layer A, foamed layer and skin layer B, as measured from the X-ray CT scan image or the electron microgram. The results are shown in Table 1.

The maximum diameter of cells, average diameter of cells, and number per unit area of cells, included in the foamed layer, are shown in Table 1. As for Examples 1 to 5, the maximum diameter and average diameter of longitudinal or lateral diameter of the cells and the average aspect ratio thereof are shown in Table 1. The mass per 100 cm² of the molded body is also shown in Table 1.

**Table 1**

| | Unit | Comp. Example 1 | Example 1 | Example 2 | Example 3 | Example 4 | Example 5 |
|---|---|---|---|---|---|---|---|
| Skin layer A thickness | mm | 0.54 | 0.32 | 0.26 | 0.34 | 0.29 | 0.30 |
| Foamed layer thickness | mm | 2.49 | 2.56 | 2.72 | 2.47 | 2.62 | 2.56 |
| Skin layer B thickness | mm | 0.54 | 0.30 | 0.28 | 0.36 | 0.27 | 0.29 |
| Total thickness | mm | 3.57 | 3.18 | 3.26 | 3.17 | 3.18 | 3.15 |
| Foamed-layer ratio | % | 69.7% | 80.5% | 83.4% | 77.9% | 82.4% | 81.3% |
| Maximum longitudinal diameter of cells | mm | - | 0.60 | 0.45 | 0.70 | 0.65 | 0.63 |
| Maximum lateral diameter of cells | mm | - | 0.84 | 0.56 | 0.61 | 0.64 | 0.63 |
| Maximum diameter of cells | mm | 0.13 | 0.84 | 0.56 | 0.70 | 0.65 | 0.63 |
| Average longitudinal diameter of cells | mm | - | 0.18 | 0.21 | 0.24 | 0.21 | 0.23 |
| Average lateral diameter of cells | mm | - | 0.15 | 0.16 | 0.14 | 0.12 | 0.14 |
| Average diameter of cells | mm | 0.08 | 0.16 | 0.19 | 0.19 | 0.17 | 0.19 |
| Average aspect ratio | - | - | 1.22 | 1.35 | 1.77 | 1.67 | 1.60 |
| Number of cells | cells/mm² | 47 | 49 | 37 | 35 | 47 | 36 |
| Mass | g/100mm² | 20.8 | 15.9 | 16.2 | 16.5 | 16.3 | 16.7 |

As shown in Table 1, the molded bodies of the Examples, in which the formed-layer ratio is in a range of from 73% to 88%, exhibit a smaller mass per unit area as compared with the molded body of the Comparative Example, in which the foamed-layer ratio was less than 73%. The results indicate that the molded bodies of the Examples achieve weight reduction.

Further, the molded bodies of the Examples exhibit a comparable strength to the molded body of the Comparative Example.

The disclosure of Japanese Patent Application No. 2020-219608 is incorporated herein by reference in its entirety.

All publications, patent applications, and technical standards mentioned in the present specification are incorporated herein by reference to the same extent as if each individual publication, patent application, or technical standard was specifically and individually indicated to be incorporated by reference.

## Claims

1. A molded body, comprising a foamed portion in which a skin layer A, a foamed layer and a skin layer B are disposed in this order in a thickness direction,
wherein in the foamed portion, the foamed layer has a ratio of thickness, with respect to a total thickness of the skin layer A, the foamed layer and the skin layer B, of from 73% to 88%.

2. The molded body according to claim 1, wherein an average diameter of cells included in the foamed layer is from 0.18 mm to 0.34 mm.

3. The molded body according to claim 1 or claim 2, wherein a number per unit area of cells at a cross-section of the foamed layer is 11 cells/mm² or more.

4. The molded body according to any one of claim 1 to claim 3, wherein a maximum diameter of cells included in the foamed layer is 0.84 mm or less.

5. The molded body according to any one of claim 1 to claim 4, wherein cells included in the foamed layer are in a state of being oriented in a thickness direction of the foamed layer.

6. The molded body according to any one of claim 1 to claim 5, wherein a thickness of the skin layer A and a thickness of the skin layer B are from 0.26 mm to 0.36 mm, respectively.

7. An automobile part, comprising the molded body according to any one of claim 1 to claim 6.

8. A method for manufacturing the molded body according to any one of claim 1 to claim 6, the method comprising:
supplying a composition including a resin and a foaming agent to an internal space of a molding apparatus having a movable portion; and
increasing a volume of the internal space by moving the movable portion of the molding apparatus.
